# EUROPEAN PATENT APPLICATION

(11) **EP 1 983 422 A2**
(43) Date of publication of application: **22.10.2008**
(21) Application number: 08007385.1
(22) Date of filing: 15.04.2008
(51) Int. Cl.: G06F 3/12

(54) **Recording system, recording medium, and recording device**

(30) Priority: 19.04.2007 JP 2007110525
(71) Applicant: Canon Finetech Inc., Misato-shi Saitama 341-8527 (JP)
(72) Inventor: Maruo, Hiroyuki, Misato-shi Saitama 341-8527 (JP); Yumoto, Chiharu, Misato-shi Saitama 341-8527 (JP); Yonemori, Tatsuya, Misato-shi Saitama 341-8527 (JP); Ota, Noritaka, Misato-shi Saitama 341-8527 (JP)
(74) Representative: Strehl Schübel-Hopf & Partner

(57) **Abstract**

Recording data generated by a recording data generation PC (100) is divided by recording data sending PCs (110, 120) and is sent to corresponding recording devices (210, 220). The recording devices (210, 220) record the received divided recording data on a common recording medium (130). If a recording error has occurred on one of the recording devices, the error is notified to the recording data generation PC via the recording data sending PC and a recording stop instructions are issued from the recording data generation PC to all recording devices. When the recording stop instruction is received, each recording device sends the recording page number at that time to the recording data generation PC. The recording data generation PC determines a desired recording page number from the recording page numbers acquired from the recording devices, acquires the recording data from a recording database, converts the acquired recording data to display data, and displays it on a display device. This configuration allows a recording system, in which the recording devices are combined to record on a common recording medium, to correctly and automatically identify a page where the error has occurred.

## Description

### DETAILED DESCRIPTION

### Field of the Invention

The present invention relates to a recording system that records an image on a common (one) recording medium using a plurality of recording devices.

### Related Art

In general, when an error has occurred during the recording or printing operation in a conventional recording system, the operation of the recording system temporarily stops to allow the user to check the status of the error and give a recording instruction, which specifies a page from which the printing is restarted. However, when an error has occurred, for example, near the end of the area of one page and the user who visually checks for an error finds that the error may be accepted, the recording device sometimes determines that an error has occurred and, when the printing is restarted, starts the recording beginning at the same page as the error page. In such a case, a duplicate copy of the same page is output and the user must remove the error page that is output. The problem here is that, if there is no problem in appearance, the user fails to remove the duplicate copy. This is very inconvenient when printing names and addresses, forms, and so on.

This problem is solved if the recording system lets the user know a page where an error has occurred. Conventionally, the techniques described below are proposed as a method for easily recognizing a page where an error has occurred.

Patent Document 1 teaches a technique that, when an error has occurred, sends a print image at the error occurrence time to the host device to allow the host side to properly know the error occurrence status and causes the host device to display the print image on the display. The user can view this print image to recognize that an error was generated during print image creation.

Patent Document 2 proposes a technique for reducing the user's load of avoiding a page mismatching problem even when a print error has occurred during double-sided printing. The technique is that, when a print error status is received from the printer, the host device displays the preview screen on which the print image is displayed and, at the same time, displays the page guide showing the correspondence between all page numbers on the top side and those on the back side of print papers. Initially, the preview screen displays the first page, and the user, who finds a print paper where a print error has occurred, updates the page on the preview screen until the preview screen corresponding to the same print paper is displayed. In this way, the user can recognize the number of the page on the preview screen corresponding to the print content where the print error has occurred.

Patent Document 1: Japanese Patent Laid-Open Publication No. Hei 10-301736

Patent Document 2: Japanese Patent Laid-Open Publication No. 2002-46329

In the mean time, in a commercial recording system in which names and addresses, forms, direct mails, etc. are printed, development efforts are under way to combine any number of recording devices, each having a line head of a fixed recording width, within the maximum allowable for use in printing on a medium of a desired recording width. In many cases, a commercial printing system records a large number of pages (in an extreme case, hundreds of thousand to tens of million of pages) in one print operation.

In the technique described in Patent Document 1, though the print image of a page where an error has occurred can be confirmed on the display screen, it is not always easy to identify the page number of the print image from a large number of pages.

In the technique described in Patent Document 2, it is also difficult and time-consuming to update a large number of pages on the preview screen and identify the page number of the page on the preview screen corresponding to the print content where a print error has occurred.

In addition, a recording system, where a plurality of recording devices are combined such as the one described above, has a specific condition that, when an error has occurred on one recording device, the page being recorded by the recording device does not always match the page being recorded by other recording devices and, so, there is a problem when the system tries to automatically identify the page on which the error has occurred.

### SUMMARY OF THE INVENTION

The present invention seeks to solve the problems associated with the prior art described above. It is an object of the present invention to provide a recording system, a recording medium such as FD, CD, DVD, ROM, HD, etc., and a recording device that can correctly and automatically identify a page where an error has occurred in a recording system in which a plurality of recording devices are combined to record on a common recording medium such as paper or the like.

A recording system according to the present invention is a recording system in which a plurality of recording devices and an information processing device are interconnected via a communication interface for recording data, stored in a recording database, on the same recording medium using the plurality of recording devices, each of the recording devices containing recording heads on each of which a plurality of recording elements are arranged. Each of the plurality of recording devices comprises means that, in response to a recording stop instruction received from the information processing device or any one of the recording devices, sends a recording page number at that time to the information processing device. The information processing device comprises means that acquires the recording page numbers from the plurality of recording devices when stopping recording due to the recording stop instruction; means that determines a desired recording page number from a plurality of recording page numbers acquired from the plurality of recording devices; means that searches the recording database for recording data corresponding to the desired recording page number; and means that converts the recording data of a page, corresponding to the desired recording page number, to display data and displays the converted data on a display device, the recording data being acquired by the search.

More specifically, each of the plurality of recording devices may further comprise means that detects a recording error generated therein during recording; means that notifies the detected recording error to the information processing device; and the information processing device may further comprise means that issues recording stop instructions to the plurality of recording devices when a recording error notification is received from any of the recording devices.

The recording heads of each of the plurality of recording devices are responsible for recording in a part of a full width of the recording medium.

When a recording error has occurred in a recording device, the information on the error is sent to the information processing device and the information processing device issues recording stop instructions to all recording devices to stop the recording operation. The information processing device acquires the recording page numbers at that time from the plurality of recording devices and determines a desired recording page number from the plurality of recording page numbers. This is because, for the reason that will be described below, the recording page numbers of the pages currently printed may differ among the recording devices. The "recording page number at that time" described above is, for example, the recording page number of the last page on which the recording device recorded normally. Note that the present invention is not limited to this page but that it is only required that the page is a predetermined page. For example, the page may be a page currently being recorded or, on the recording device on which an error was generated, the page may be a page on which the error was generated.

If the plurality of acquired recording page numbers are all the same, the determination unit that determines a desired recording page number selects the recording page number as the desired recording page number and, if the plurality of acquired recording page numbers are different, selects a smallest recording page number as the desired recording page number (where it is assumed that pages are recorded in ascending order of recording page numbers).

The recording database may be provided in the information processing device or may be separately provided in the plurality of recording devices.

The information processing device may include a first information processing device for generating recording data and a plurality of second information processing devices, one for each of the plurality of recording devices, for sending recording data. In this case, the first information processing device sends the same recording data to the plurality of second information processing devices, and each of the second information processing devices extracts recording data of a part, for which the corresponding recording device is responsible, and sends the extracted recording data to the corresponding recording device.

There is also provided a recording medium according to the present invention, such as FD, CD, DVD, ROM, HD, etc., in which a control program is readably recorded or stored, the control program being for execution on an information processing device connected to a plurality of recording devices via a communication interface for recording data, stored in a recording database, on the same recording medium using the plurality of recording devices, each of the recording devices containing recording heads on each of which a plurality of recording elements are arranged. The control program causes a computer to execute the steps of issuing a recording stop instruction to the plurality of recording devices when a recording error notification is received from any one of the recording devices; acquiring recording page numbers, which were being processed at a time the recording stop instruction was received, from the plurality of recording devices; determining a desired recording page number from the plurality of acquired recording page numbers; searching the recording database for recording data corresponding to the desired recording page number, and converting the recording data of a page, corresponding to the recording page number, to display data for displaying on a display device, the recording data being acquired by the search.

A recording device that contains recording heads on each of which a plurality of recording elements are arranged, that is connected to an information processing device via a communication interface, and that works with other recording devices to record recording data, stored in a recording database, on the same recording medium, the recording device comprises a detection unit detects a recording error generated during recording; a notification unit that notifies the detected recording error to the information processing device; and a sending unit that, in response to a recording stop instruction from the information processing device, sends a recording page number at that time to the information processing device.

In a recording system in which a plurality of recording devices are combined to record on a common recording medium, the present invention allows the user to correctly and automatically identify a page on which an error was generated even if a large number of pages are recorded. Therefore, the user can remove duplicate pages and restart recording beginning at an appropriate page after an error has occurred.

### BRIEF DESCRIPTION OF THE DRAWINGS

FIG. 1 is a diagram showing the general configuration of a recording system in an embodiment of the present invention.
FIG. 2 is a diagram showing the general internal configuration and the interconnection status of a recording data generation PC, recording data sending PCs, and corresponding recording devices that constitute the recording system shown in FIG. 1.
FIG. 3 is a diagram showing the software configuration of the components of the recording system in FIG. 1 and FIG. 2.
FIG. 4 is a diagram showing an example of the display screen (management screen) of a recording data management program executed in the recording data generation PC in the recording system in FIG. 1.
FIG. 5 is a diagram showing an example of the display screen for browsing a selected page of the recording data of a selected print job in the embodiment of the present invention.
FIG. 6 is a flowchart showing an example of processing from the time a print jog is accepted to the time the recording is started in the recording system shown in FIG. 1.
FIG. 7 is a flowchart showing the operation when an error has occurred during the recording of recording data on the recording device in the recording system shown in FIG. 1.
FIG. 8 is a flowchart showing the operation when an error has occurred in a configuration where recording database in the embodiment of the present invention is separately provided in the recording devices.

### DETAILED DESCRIPTION OF PREFERRED EMBODIMENTS

A preferred embodiment of the present invention will be described in detail with reference to the drawings.

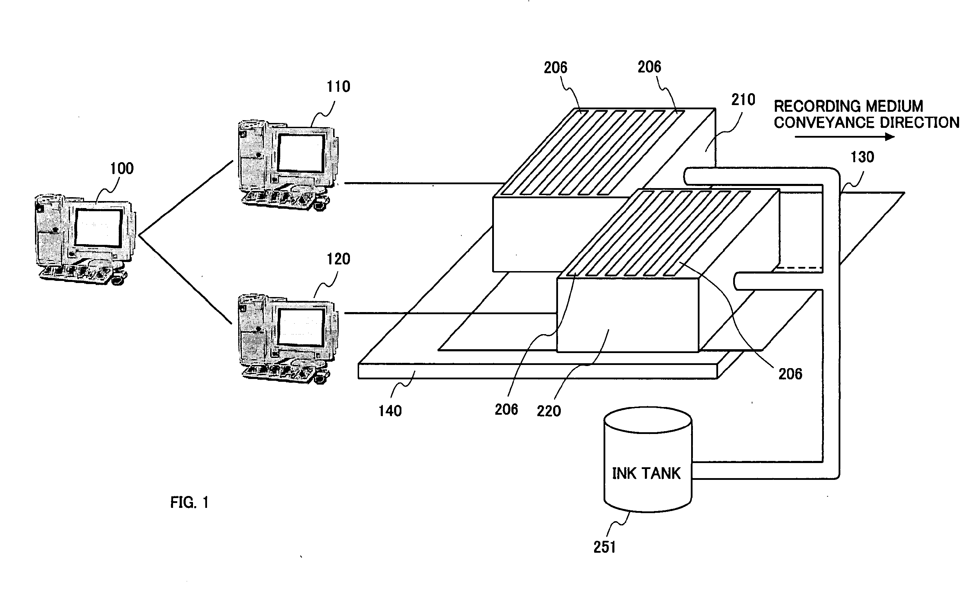

FIG. 1 is a diagram showing the general configuration of a recording system in this embodiment. This recording system comprises an information processing device (for example, personal computer: PC) 100 for generating recording data, a plurality of information processing devices (two devices in the figure) 110 and 120 for sending recording data, a plurality of recording devices (two devices in the figure) 210 and 220, and a conveyer 140 and an ink tank 251 shared by the recording devices. The PC 100 for generating recording data (hereinafter also called "recording data generation PC") is a recording data generation device for generating recording data that is recorded by each of the plurality of recording devices 210 and 220 when an image is recorded on a common recording medium by those recording devices. The recording data generation PC 100 is connected to the PCs for sending recording data (hereinafter also called "recording data sending PC") 110 and 120 via the communication interface (not shown) having a network hub. The communication interface that can be used is a network cable, a USB cable, a wireless LAN, and so on. The recording data sending PCs 110 and 120 send corresponding recording data to the corresponding recording devices 210 and 220 and, at the same time, monitors their status.

In addition to the recording data generation PC 100, the recording data sending PCs 110 and 120 are provided, one for each recording device. This is because high-speed operation for reducing the time required for recording is an important point in a commercial recording system where a large amount of data is printed. To satisfy this need, the system is configured in such a way that the recording data generation PC 100 sends the same recording data to the recording data sending PCs 110 and 120 and that each of the recording data sending PC extracts the recording data of the width responsible for itself and sends the extracted recording data to the corresponding recording device. In case where high-speed operation is not required, it is also possible for one recording data generation PC 100 to perform the function of the recording data sending PCs 110 and 120.

When an image is recorded on a recording medium 130 such as paper or the like in the recording system shown in FIG. 1, the recording data generated by the recording data generation PC 100 is transferred to the recording data sending PCs 110 and 120. The recording data sending PCs 110 and 120 are connected to the corresponding recording devices 210 and 220, each via the communication interface. This communication interface is a network cable, a USB cable, an IEEE1284 cable, etc. In this example, recording data is sent from the recording data sending PCs 110 and 120 to the corresponding recording devices 210 and 220 via a USB cable.

The recording devices 210 and 220 in this embodiment, each of which is a printer unit configuring an independent engine, operate individually based on the image data received from the corresponding recording data sending PCs 110 and 120. It should be noted here that the recording devices 210 and 220 share the ink tank 251 and record on the common recording medium 130 while conveying the common recording medium 130 with the shared conveyer 140.

The recording devices 210 and 220 are arranged along the width direction (in the direction orthogonal to the conveyance direction) of the recording medium 130 so that each can record in the divided recording area corresponding to a part of the width of the whole recording area of the recording medium 130. To prevent a blank from occurring in the boundary between the neighboring divided recording areas, the recording devices are shifted each other in the conveyance direction so that the recordable ranges overlap in the boundary between the neighboring recording devices. Although two recording devices are shown in the example in the figure, three or more recording devices, when used, are arranged in a zigzag manner.

Each of the recording devices 210 and 220 has an inkjet recording head (that is, a line head) composed of many recording elements (nozzles) extending in the width direction of the recording medium 130. Ink is ejected from each of the inkjet recording heads based on image data received from the corresponding recording data sending PCs 110 and 120.

The recording data sending PCs 110 and 120 send recording data, which is to be recorded respectively by the recording devices 210 and 220, to the recording devices 210 and 220 in synchronization with the operation of the conveyer 140 that conveys the recording medium 130 and according to positions along which the recording medium 130 is conveyed.

In this embodiment, each of the recording devices 210 and 220 has six inkjet recording heads 206 for ejecting black (K) ink and is connected to the ink tank 251 via an ink tube. Ink of the same color is supplied to the inkjet recording heads for high-speed monochrome recording.

In this embodiment, the recording device 210 records an image in the right-hand side divided recording area on the recording medium 130, and the recording device 220 records an image in the left-hand side divided recording area on the recording medium 130, with respect to the upstream of the conveyance direction.

As described above, the recording devices 210 and 220 comprises printer units each of which is independently controlled based on image data received from the corresponding recording data sending PCs 110 and 120.

The recording data sending PCs 110 and 120 receive recording data generated by the recording data generation PC 100, sends the received recording data to the corresponding recording devices 210 and 220, and monitors the status of the recording devices 210 and 220.

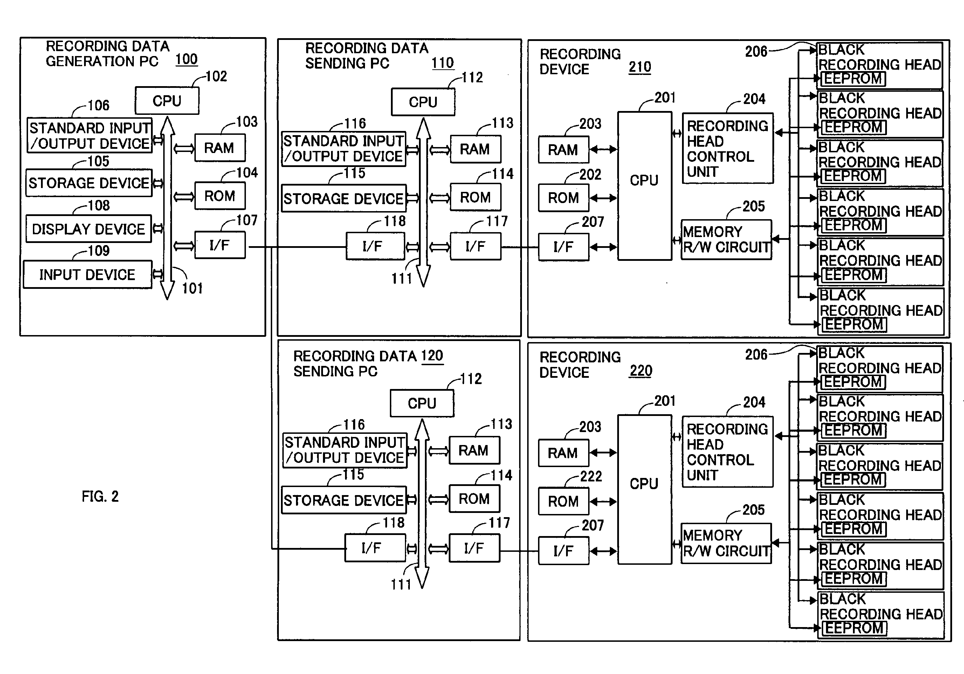

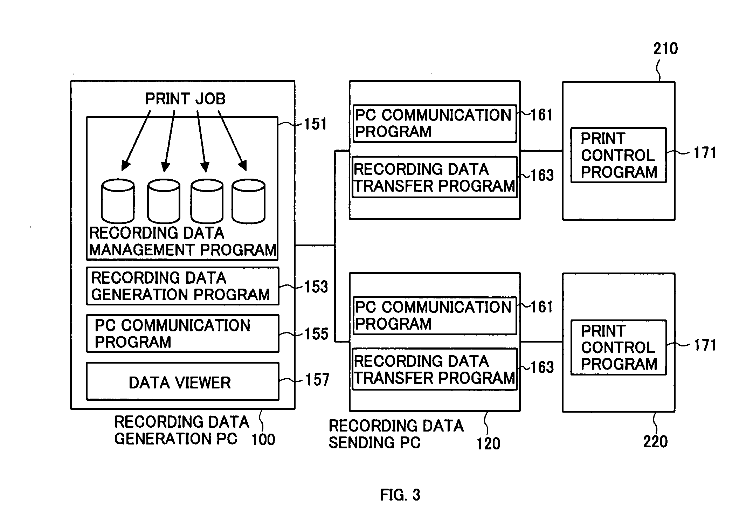

FIG. 2 is a diagram showing the general internal configuration and the interconnection status of the recording data generation PC 100, recording data sending PCs 110 and 120, and corresponding recording devices 210 and 220 that configure the recording system. FIG. 3 is a diagram showing the software configuration of the components of the recording system shown in FIG. 1 and FIG. 2.

Referring to FIG. 2, the recording data generation PC 100 and the recording data sending PCs 110 and 120 execute an image data generation application (program) and a recording control program (printer driver) under control of the operating system. In this embodiment, Windows (registered trademark) is used as the operating system.

The recording data generation PC 100 comprises a CPU 102 that constitutes a control unit for controlling the components, a RAM (Random Access Memory) 103 that is a memory provided as working areas and temporary storage areas for the CPU 102, a ROM (Read Only Memory) 104 that is a nonvolatile memory in which the boot program executed initially by the CPU 102 and other necessary programs are stored, a storage device 105, a standard input/output unit 106, a communication interface (I/F) 107, a display device 108, and an input/output device 109, all of which are interconnected via a system bus 101. The storage device 105 such as a large-capacity external storage unit, connected to the system bus 101 via the interface, stores the operating system and various programs. The system bus 101 is connected to the recording data sending PCs 110 and 120 via the communication interface 107.

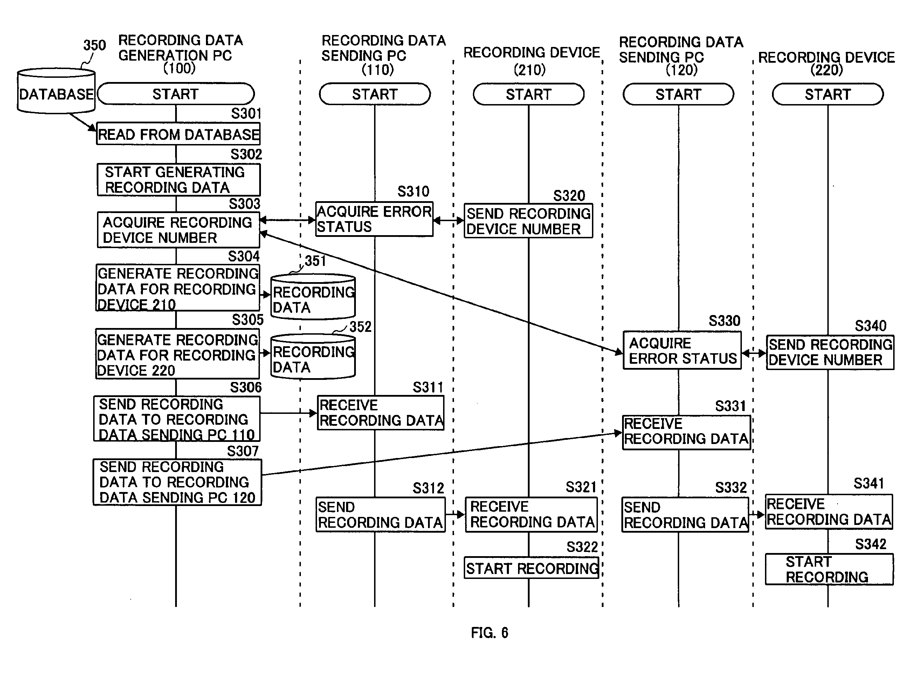

As shown in FIG. 3, the storage device 105 includes the following programs: a recording data management program 151 that accepts a plurality of print jobs and manages the corresponding recording data, a recording data generation program 153 that generates recording data to be distributed to the recording devices, a PC communication program 155 that performs communication with the recording data sending PCs 110 and 120, and a data viewer 157 that is a program for displaying an image on the recording data management screen and the preview screen. The storage device 105 also includes a database 350 (see FIG. 6) in which recording data for recording in this embodiment is stored.

Because the configuration of the recording data sending PC 110 and that of the recording data sending PC 120 are the same, the following describes only the configuration of the recording data sending PC 110. The recording data sending PC 110 comprises a CPU 112 that constitutes a control unit for controlling the recording data sending PC 110, a RAM (Random Access Memory) 113 that is a memory provided as working areas and temporary storage areas for the CPU 112, a ROM (Read Only Memory) 114 that is a nonvolatile memory in which the boot program etc. executed initially by the CPU 112 are stored, a storage device 115, a standard input/output unit 116, and communication interfaces (I/F) 117 and 118, all of which are interconnected via a system bus 111. The storage device 115 such as a large-capacity external storage unit, connected to the system bus 111 via the interface, stores the operating system and various programs. The system bus 111 is connected to the recording device 210 via the communication interface 117 and is connected to the recording data generation PC 100 via the communication interface 118.

As shown in FIG. 3, the storage device 115 of the recording data sending PC 110 stores the following programs: a PC communication program 161 that communicates with the recording data generation PC 100 and a recording data transfer program 163 that transfers recording data, received from the recording data generation PC 100, to the corresponding recording device 210 and manages its status.

Because the configuration of the recording device 210 and that of the recording device 220 are the same, the following describes only the configuration of the recording device 210. As shown in FIG. 2, the recording device 210 comprises a RAM 203 which is controlled by a CPU 201 that executes a print control program 171 (FIG. 3) stored in a ROM 202 and in which recording data is stored, a communication interface 207 provided for communication with the recording data sending PC 110, a recording head control unit 204 that controls the recording head 206, and a memory control (R/W) circuit 205 that reads data from, and writes data to, the memory in each recording head. Each recording head 206 has a rewritable nonvolatile memory installed therein. An EEPROM is used for this nonvolatile memory in this embodiment.

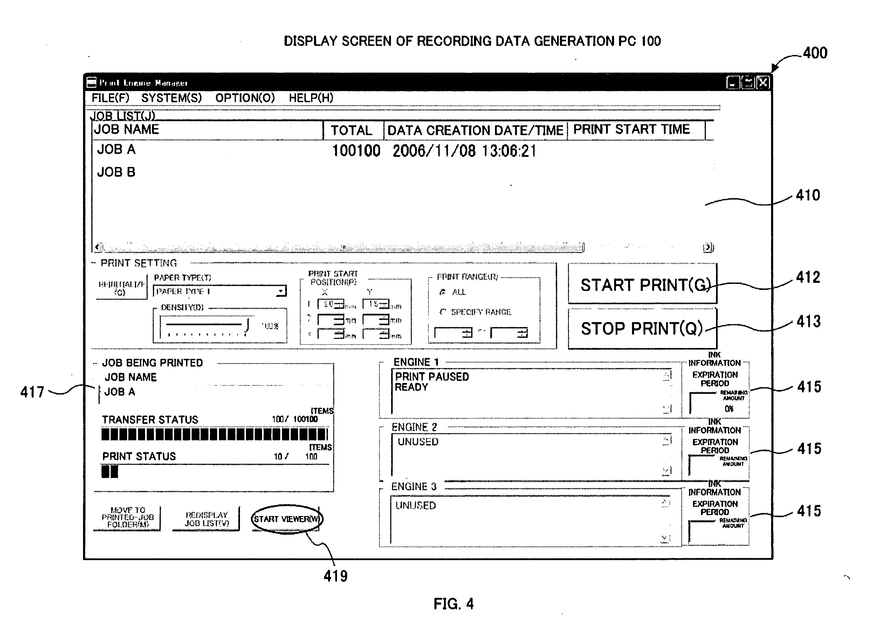

FIG. 4 is a diagram showing an example of the display screen (management screen) displayed by the recording data management program executed in the recording data generation PC 100.

In a Job field 410 on a management screen 400, the following items are displayed: "JOB NAME" that indicates the name of a registered print job, "TOTAL NO. OF RECORDING DATA" that indicates the number of recording objects in the database, "DATA CREATION DATE/TIME" that indicates a date/time at which recording data is created, and "PRINT START TIME" that indicates a date/time at which the printing of recording data is started. Although it is assumed in this example that one set of data items in the database is printed on one print page, plural sets of data items may also be printed on one page.

A Start Print button 412 is a button used by the user to instruct the start of the printing of a selected print job. A Stop Print button 413 is a button used by the user to instruct the stop of the printing that is once started. The current status of each recording device and the engine status (including error status) such as the ink remaining amount are displayed in an engine status field 415.

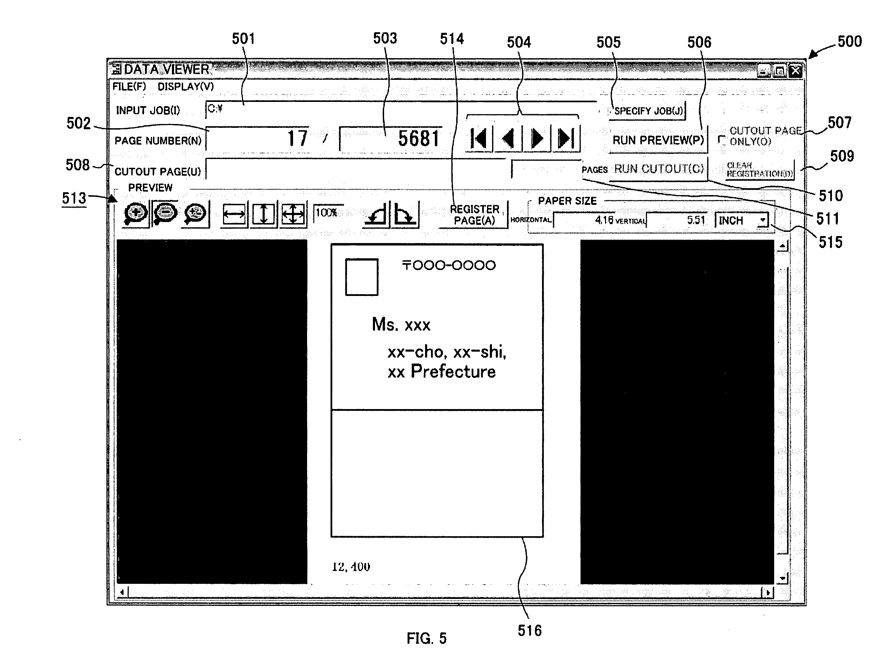

In a Job status field 417, "JOB NAME" of a job being printed and "TRANSFER STATUS" and "PRINT STATUS" of the recording data are displayed. A Start Viewer button 419 is a button used to display a display screen 500 (FIG. 5) provided by the present invention for browsing the selected page of the recording data of a selected print job.

FIG. 5 is a diagram showing an example of the display screen 500.

An "INPUT JOB" field 501 is a field in which a print job to be browsed is specified. In this field, a data file name, which is selected from the file list screen (not shown) opened when the user presses the "SPECIFY JOB" button 505, is entered. The "RUN PREVIEW" button 506 is a button the user uses to browse the recording image of a selected page of the specified print job as a preview image. The total number of pages of the print job is displayed in a field 503, and the number of the page that is browsed is displayed in a "PAGE NUMBER" field 502. The page can be changed by operation buttons 504. A "CUTOUT PAGE" field 508 is a field in which the user enters the number of a page to be cut out. If a page number is entered in the "CUTOUT PAGE" field 508 when recording data is printed, a "CUTOUT PAGE ONLY" check button 507, a "CLEAR REGISTRATION" button 509, and a "RUN CUTOUT" button 510 become effective. The cutout page function is used to cut out recording data of the page entered in the "CUTOUT PAGE" field 508 for printing the page again that was not normally printed because of a jam or a recording error. The "CUTOUT PAGE ONLY" check button 507 is a check button used to display the preview of only the page entered in the "CUTOUT PAGE" field 508. The "CLEAR REGISTRATION" button 509 is a button used to clear the page number entered in the "CUTOUT PAGE" field 508. When the page number is cleared, the "CUTOUT PAGE ONLY" check button 507, "CLEAR REGISTRATION" button 509, and "RUN CUTOUT" button 510 become ineffective (dimmed on the screen) and cannot be selected. The "RUN CUTOUT" button 510 is a button used to run the cutout of the page entered in the "CUTOUT PAGE" field 508. When the number of a page to be cut out is entered in the "CUTOUT PAGE" field 508, the number of pages to be cut out is displayed in a "PAGES" field 511. "PREVIEW" operation buttons 513 are buttons used to enlarge, reduce, and rotate the preview of one page. A "REGISTER PAGE" button 514 is a button used to cut out the page currently displayed. When the "REGISTER PAGE" button 514 is pressed, the page number of the page displayed on the preview image is entered in the "CUTOUT PAGE" field 508. A "PAPER SIZE" field 515 is a field in which the size of the page that is set is displayed. The preview image of the page is displayed in an image display area 516.

When an error has occurred in any of the recording devices in this embodiment, the screen 500 is displayed according to the user's instruction or automatically by the recording data generation PC 100 with the reported page number (smallest page number when plural pages are reported) automatically in the page number field 502. When a recording error has occurred, the preview of the page is run when the user presses the "RUN PREVIEW" button 506.

FIG. 6 is a flowchart showing an example of processing from the time a print job is accepted to the time the recording is started in the recording system shown in FIG. 1. The figure shows the processing of the recording data generation PC 100, recording data sending PCs 110 and 120, and recording devices 210 and 220 as well as the relation among them.

The user who wants to execute a print job specifies the name of a job, which will execute printing, on the management screen 400, shown in FIG. 4, of the recording data generation PC 100. The job name, when specified, causes the recording data generation program, stored in the recording data generation PC 100, to read the specified print job from the database 350 in the storage device 105 (S301) and start generating the recording data according to the instruction from the user (for example, by pressing the Start Print button 412 described above) (S302). The recording data in the database 350 has the binary data format or is coded in a page description language.

After the recording data generation processing is started, the recording data generation PC 100 requests each of the recording data sending PCs 110 and 120 to send the recording device number (engine number) of the corresponding recording device 210 or 220 (S303). The recording device number is a unique identification number assigned in advance to each recording device included in the recording system. The recording data sending PCs 110 and 120, which have received the status of the recording device number sending request, receive the recording device number from the recording devices 210 and 220 (S320, S340) and return the received recording device numbers to the recording data generation PC 100 (S310, S330).

The recording data generation PC 100 uses the recording device number, acquired in step S303, to generate recording data 351 and 352 corresponding to the recording device numbers and sends the generated recording data 351 and 352 to the shared work area of the recording data sending PCs 110 and 120.

That is, the recording data generation program in the recording data generation PC 100 generates the recording data 351 for the recording device 210 (S304), and generates the recording data 352 for the recording device 220 (S305). After that, the recording data generation program in the recording data generation PC 100 notifies the communication program in the recording data generation PC 100 that the generation of the recording data 351 is terminated. In response to this notification, the communication program sends the recording data 351 to the recording data sending PC 110 (S306) and, at the same time, sends the recording data 352 to the recording data sending PC 120 (S307).

Each of the recording data sending PCs 110 and 120 receives the recording data sent to it (S311, S331) and transfers the received data to the corresponding recording device 210 or 220 (S312, S332). The recording devices 210 and 220 receive the recording data (S321, S341) and starts recording (S322, S342).

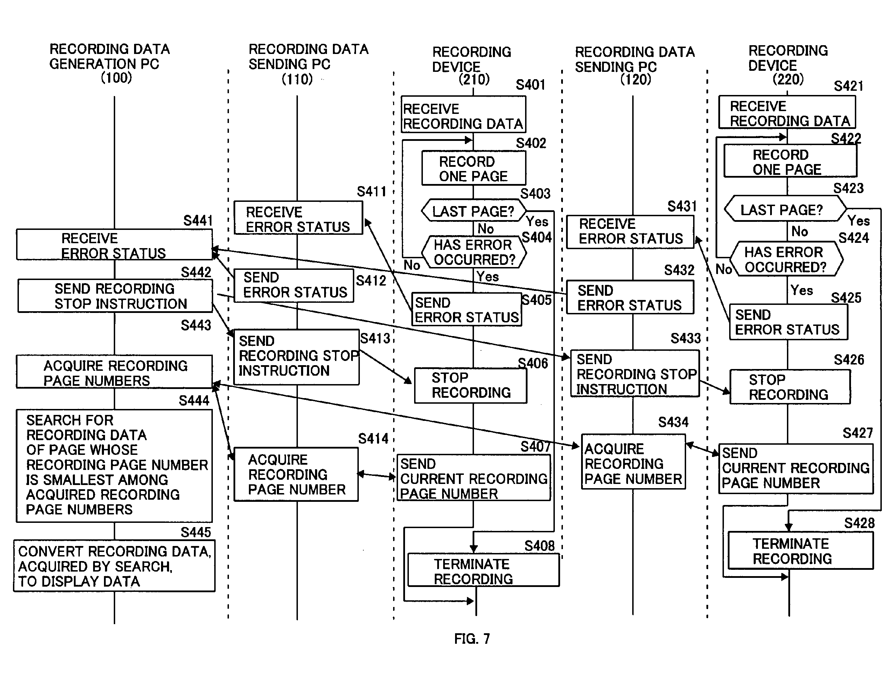

Next, referring to FIG. 7, the following describes the operation performed when an error has occurred while the recording devices 210 and 220 are recording data. The figure shows the processing from the time the recording devices 210 and 220 receive recording data.

When the recording data is received (S401, S421), the recording devices 210 and 220 each start recording the first page (S402, S422). If there are plural pages, that is, if the recorded page is not the last page (No in S403 or No in S423), the recording devices 210 and 220 sequentially record the next page (S402, S422). After the recording of all pages is finished, the recording devices 210 and 220 perform the recording termination processing (S408, S428).

If an error has occurred in one of the recording devices 210 and 220 before the recording of the last page is completed (Yes in S404 or Yes in S424), the recording device sends the error status to the corresponding recording data sending PC 110 or 120 (S405, S425).

When the error status is received from the recording device 210 or 220 (S411, S431), the corresponding recording data sending PC 110 or 120 notifies the communication program in the recording data generation PC 100 about the error status (S412, S432).

When the error status is received from one of the recording data sending PCs 110 and 120 (S441), the communication program in the recording data generation PC 100 displays an error-indicating status on the display device 108 (FIG. 1) provided on the recording data generation PC 100 and sends the recording stop instruction to both the recording data sending PCs 110 and 120 to stop recording on the recording devices 210 and 220 (S442). When the recording stop instruction to stop recording on the recording devices 210 and 220 is received from the recording data generation PC 100, the recording data sending PCs 110 and 120 send the instruction to the recording devices 210 and 220 to stop recording on the recording devices 210 and 220 (S413, S433).

When the recording stop instruction is received from the recording data sending PCs 110 and 120, the recording devices 210 and 220 stop the recording operation (S406, S426) and send the current (at stop time) recording page numbers to the recording data sending PCs 110 and 120 (S407, S427). In this example, the current (that is, stop time) recording page number is the number of the page last recorded normally on the recording device.

The recording data sending PCs 110 and 120 send the acquired recording page numbers to the recording data generation PC 100 (S414, S434). The recording data generation PC 100 acquires the recording page numbers from the recording data sending PCs 110 and 120 (S443).

The recording data generation PC 100 searches the database 350 for the recording data of a page whose page number is the smallest among the acquired recording data page numbers (S444). As described above, it is assumed that the pages are recorded in ascending order of page numbers. In the present invention, because a plurality of recording devices record images on the common recording medium and the layout positions of the plurality of recording devices are shifted in the recording medium conveyance direction as shown above in FIG. 1, it is possible that the recording page numbers notified by the plurality of recording devices sometimes differ. In addition, when an error has occurred in one recording device, the recording data generation PC 100 that receives the error notification outputs the recording stop instruction to all recording devices. So, there is a delay from the time the error has occurred in the recording device to the time the other recording devices stop the recording operation and, during that period, the other recording devices continue the recording. If the recording page numbers notified from the recording devices differ because of any of those factors described above and if a page is recorded based on the larger page number, there may be a case in which the page is not recorded normally on some recording devices.

The recording data generation PC 100 searches the database for the recording data of a page whose page number is acquired as described above. This search may be performed based on the page number either according to the user instruction or automatically. The recording data generation PC 100 converts the recording data, acquired by the search, to display data and displays the converted data on the display device (S445). The display data is image data having the data format BMP, JPEG, or GIF. It is assumed in this embodiment that the recording data is generated from data whose data format is csv and, so, there is no display data for the recording data. In addition, display data, if saved separately, requires a large capacity because there are a large number of data items. Thus, display data is not saved in this embodiment.

In this way, the user can easily confirm the page number and the display content of the page on the display screen. The displayed page allows the user to know that the page having the displayed page number is the page whose whole image was normally recorded last on all recording devices and that the error was generated on the next page in one of the recording devices. So, the printed paper of the error page, if output, must be removed by the user because it is usually incomplete and will be output in duplicate when the recording is restarted. It should be noted here that, if the printed paper of the error page is determined as effective and usable, the user can also give an instruction to restart the recording beginning at the next page of the error page.

It is also possible that the recording data generation PC 100 receives the information on the type of error detected and displays this information to the user as the recording error information.

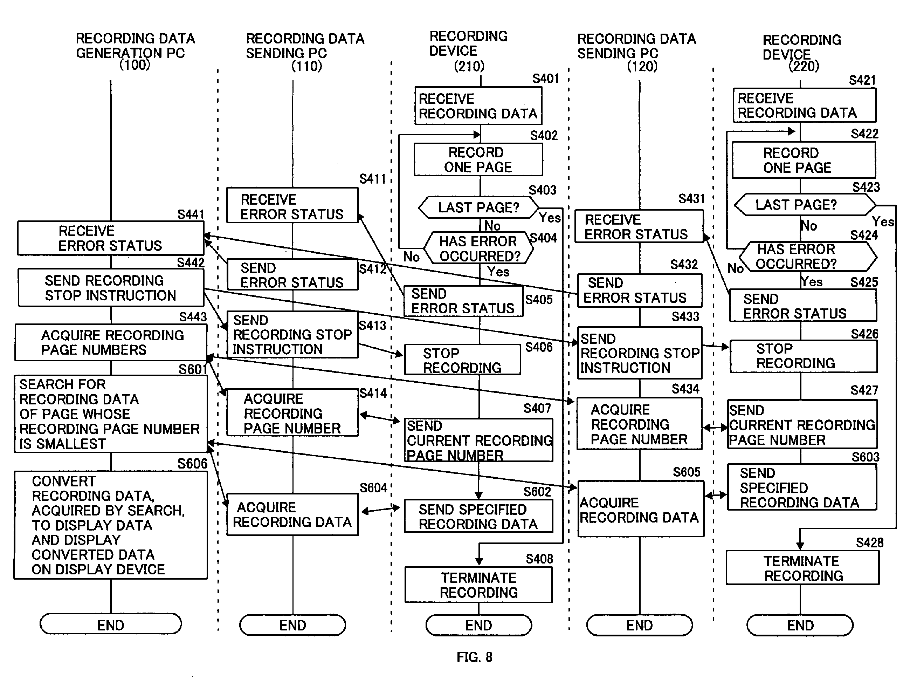

In the processing in FIG. 7, it is assumed that the database of recording data is provided in the recording data generation PC 100. Instead, the database of recording data may also be separately provided in the recording devices 210 and 220. FIG. 8 is a diagram showing the flow of processing in such a case. The same reference numerals are used to denote the same processing steps as those shown in FIG. 7 and the duplicate description of the processing step will be omitted.

When an error has occurred in one of the recording devices 210 and 220, the recording device sends the error status to the recording data generation PC 100 via the recording data sending PC 110 or 120 as in FIG. 7 and, after the recording is stopped, the recording devices 210 and 220 send the recording page numbers at the error occurrence time to the recording data sending PCs 110 and 120.

After that, from the recording devices 210 and 220, the recording data generation PC 100 acquires the recording data of the page having the smaller recording page number of the recording page numbers acquired from the recording data sending PCs 110 and 120 (S601-S605). Next, the recording data generation PC 100 converts the acquired recording data to display data and displays the converted data on the display device (S606).

The processing in FIG. 8, in which recording data is saved on the recording device side, is efficient when the storage capacity of the recording data generation PC is small. In contrast, the processing in FIG. 7 eliminates the need for sending recording data from the recording device side to the recording data generation PC when an error has occurred and, so, speedily displays the data.

While the preferred embodiments of the present invention have been described, it is to be understood that the present invention is not limited to the embodiments described above but that various changes and modifications may be made. For example, the number of recording devices and the number of heads are exemplary only and are not limited to those in the examples described above. The ink color of the heads is not limited to the monochrome but color heads may also be used.

## Claims

1. A recording system in which a plurality of recording devices and an information processing device are interconnected via a communication interface for recording data, stored in a recording database, on the same recording medium using said plurality of recording devices, each of said recording devices containing recording heads on each of which a plurality of recording elements are arranged, wherein
each of said plurality of recording devices comprises:
means that, in response to a recording stop instruction received from said information processing device or any one of the recording devices, sends a recording page number at that time to said information processing device; and wherein
said information processing device comprises:
means that acquires said recording page numbers from said plurality of recording devices when stopping recording due to the recording stop instruction;
means that determines a desired recording page number from a plurality of recording page numbers acquired from said plurality of recording devices;
means that searches said recording database for recording data corresponding to the desired recording page number; and
means that converts the recording data of a page, corresponding to the desired recording page number, to display data and displays the converted data on a display device, said recording data being acquired by the search.

2. The recording system according to claim 1 wherein each of said plurality of recording devices further comprises:
means that detects a recording error generated therein during recording;
means that notifies the detected recording error to said information processing device; and wherein
said information processing device further comprises:
means that issues recording stop instructions to said plurality of recording devices when a recording error notification is received from any of the recording devices.

3. The recording system according to claim 1 or 2 wherein the recording heads of each of said plurality of recording devices are responsible for recording in a part of a full width of the recording medium.

4. The recording system according to claim 1, 2 or 3 wherein, if the plurality of acquired recording page numbers are all the same, said means that determines a desired recording page number selects the recording page number as the desired recording page number and, if the plurality of acquired recording page numbers are different, selects a smallest recording page number as the desired recording page number.

5. The recording system according to one of claims 1-4 wherein the recording page number at that time is a recording page number of a last page that was recorded normally on said recording device.

6. The recording system according to one of claims 1-5 wherein said recording database is provided in said information processing device.

7. The recording system according to one of claims 1-5 wherein said recording database is distributed to said plurality of recording devices.

8. The recording system according to claim 1 wherein said recording device sends information on an error type, detected by said means that detects a recording error, as error information on the recording error.

9. The recording system according to one of claims 1-8 wherein
said information processing device includes a first information processing device for generating recording data and a plurality of second information processing devices, one for each of said plurality of recording devices, for sending recording data and
said first information processing device sends the same recording data to said plurality of second information processing devices and each of said second information processing devices extracts recording data of a part, for which the corresponding recording device is responsible, and sends the extracted recording data to the corresponding recording device.

10. A recording medium in which a control program is readably recorded, said control program prepared for execution on an information processing device connected to a plurality of recording devices via a communication interface for recording data, stored in a recording database, on the same recording medium using said plurality of recording devices, each of said recording devices containing recording heads on each of which a plurality of recording elements are arranged, said control program causing a computer to execute the steps of:
issuing a recording stop instruction to said plurality of recording devices when a recording error notification is received from any one of the recording devices;
acquiring recording page numbers, which were being processed at a time the recording stop instruction was received, from said plurality of recording devices;
determining a desired recording page number from the plurality of acquired recording page numbers;
searching said recording database for recording data corresponding to the desired recording page number; and
converting the recording data of a page, corresponding to the desired recording page number, to display data for displaying on a display device, said recording data being acquired by the search.

11. A recording device that contains recording heads on each of which a plurality of recording elements are arranged, that is connected to an information processing device via a communication interface, and that works with other recording devices to record recording data, stored in a recording database, on the same recording medium, said recording device comprising:
means detects a recording error generated during recording;
means that notifies the detected recording error to said information processing device; and
means that, in response to a recording stop instruction from said information processing device, sends a recording page number at that time to said information processing device.

12. The recording device according to claim 11
wherein the recording heads of the recording device each are responsible for recording in a part of a full width of the recording medium.
